# EUROPEAN PATENT SPECIFICATION

(11) **EP 0 585 209 B1**
(45) Date of publication and mention of the grant of the patent: **09.04.1997**
(21) Application number: 93850166.5
(22) Date of filing: 25.08.1993
(51) Int. Cl.: B62D 7/14

(54) **Arrangement for neutral spring-effect steering of the wheels on a vehicle back-axle**
Vorrichtung zum Lenken der Hinterräder mit einem neutralen Federeffekt
Dispositif de commande d'orientation des roues arrières avec un effet de suspension neutre

(30) Priority: 26.08.1992 SE 9202449
(43) Date of publication of application: 02.03.1994
(73) Proprietor: AB VOLVO, 405 08 Göteborg (SE)
(72) Inventor: Birkedal, Georg, N-3080 Holmestrand (NO)
(74) Representative: Hellbom, Lars Olof

(56) References cited:
- DE-A- 2 934 730
- US-A- 2 698 668
- US-A- 2 791 286
- US-A- 3 913 936
- US-A- 4 941 671

## Description

The present invention relates to an arrangement for steering a steerable vehicle wheel which is sprung-suspended in such a way that the sprung movements of the wheel follow a circular arc lying in a longitudinal and vertical plane of the vehicle, comprising an active movement-transmitting link and swinging arm system between the vehicle's steering gear and a steering arm connected with an axle shaft, which presents a first swinging arm swingable in a longitudinal vertical plane and a first link arm pivotally connected with the first swinging arm and with the steering arm which, upon swinging of the first swinging arm, transmits swinging movements for steering deflection of the axle shaft.

Such steerable wheels can for example be the wheels of a so-called pusher axle which is sometimes used in order to allow an increase in the loading weight of trucks. The pusher axle is placed in front of the drive axle and has steerable wheels, the steering deflection of which is dependent on the steering deflection of the front wheels, in order to i.a. reduce tyre wear and improve manoeuvrability thereby.

It is suitable i.a. for reasons of space, to suspend wheels of the pusher axle in rocker arms which form a parallelogram and have their pivot connections with the vehicle's chassis located behind the wheels, whereby the sprung movement along a circular arc having its centre located behind the wheels is obtained as defined in the introduction. The displacement of the wheels in the vehicle's longitudinal direction which occurs, has to be compensated to the greatest possible degree so that the sprung movements do not propagate into the link arm and swinging arm system of the steering gear in such a way that they give rise to steering movements in the system.

This can be easily achieved, purely in principal, if the link arm connected with the steering arm has its pivotal centre on the same side of the wheel axel as the pivotal centre for the suspension and is arranged so that the swinging of the wheel axle and the steering joint of the steering arm occur along concentric circles. The problem is however that with many practical applications it is very difficult to achieve a constructive solution which allows both the rocker arms of the suspension and the link arm and swinging arm system of the steering system to be placed in the space between wheels of the pusher axle and the drive wheels positioned behind them.

The object of the present invention is to achieve an arrangement of the type defined in the introduction which permits the location of the link arm and swinging arm system in a place where it will not normally interfere with the suspension system, at the same time as completely eliminating the risk that the sprung movements will result in steering movements in the steering system.

This is achieved according to the invention in that the first swinging arm is positioned on the side of the wheel's axis of rotation which is opposite to the pivotal centre of the suspension movement, in that a second swinging arm is positioned beyond the first swinging arm - as seen from the steering arm - and is pivotally connected with the first link arm, and in that the first swinging arm is connected with the first link arm by means of a second link arm, of which the pivot point on the first swinging arm is positioned at the centre of the circular arc along which its pivot point on the first link arm moves when the pivot point on the steering arm moves along said circular arc during suspension movement.

The invention is based on the understanding that when the steering arm, during suspension movements of the wheel, moves along its circular arc, each point along the first link arm will move along a circular arc of which the radius reduces in a direction towards the second swinging arm, finally reaching zero at the pivot point on the second swinging arm. Since all circles have a centre, this means that there are points in space which are fixed despite suspension movements and, by choosing such a point for the connection of the second link arm with the first steering arm, a link arm and swinging arm system is obtained in which the first swinging arm is completely unaffected by the suspension movement.

The invention will now be described in more detail with reference to an embodiment shown in the accompanying drawings, in which fig. 1 is an outline diagram of a truck chassis with a schematic representation of a steering arrangement according to the invention, fig. 2 a schematic side view of the link arm and swinging arm system of the steering arrangement illustrating its movement pattern and figs. 3 and 4 a plan view and respectively a side view of an embodiment of the link arm and swinging arm system.

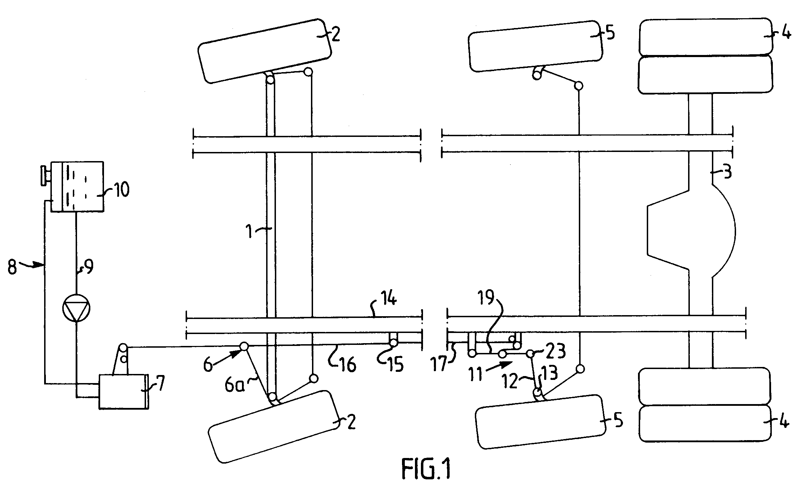

In fig. 1 reference numeral 1 denotes a front axle with steerable front wheels 2, and 3 a back axle with driving wheels 4. The wheel suspension (not shown) of a pair of individually suspended and sprung wheels 5 in front of the drive wheels forms a so called "pusher axle". The front wheels are coupled via a conventional link system 6 to a steering gear with servomotor 7 which is connected in a hydraulic circuit 8 with a pump 9 and a reservoir 10. The link system 6 is coupled, via a link arm and swinging arm system generally denoted by 11, to a steering arm 12 on the axle shaft 13 of one of said wheels 5 so that the wheels 5 have their steering deflection dependent on the steering deflection of the front wheels 2.

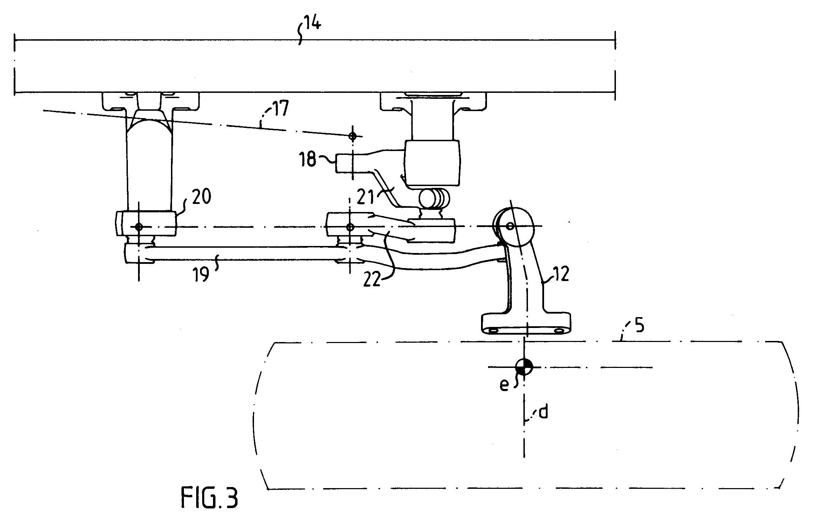

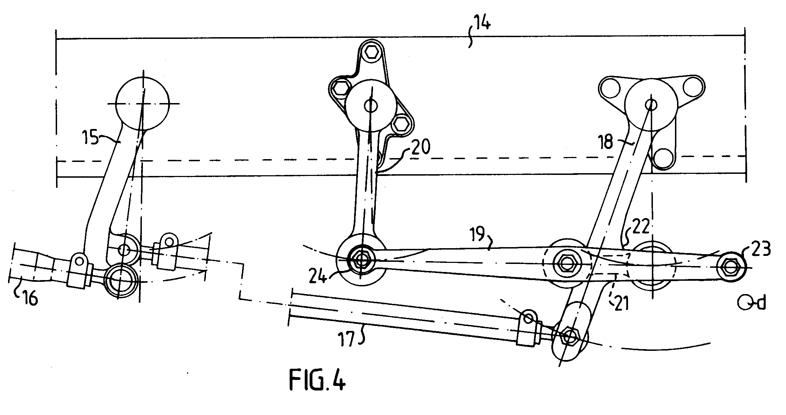

The link arm and swinging arm system 11 which is shown in more detail in fig. 3 and fig. 4 comprises a bar 16 pivotally connected between a steering arm 6a on one front wheel 2 and an arm 15 pivotally supported on a chassis member 14. A second bar or link arm 17 is pivotally connected between the arm 15 and an additional arm 18 pivotally supported on the chassis member 14. A link arm 19 at one of its ends is pivotally connected with the steering arm 12 and, at its other end, with a third arm 20 pivotally supported on the chassis member 14. The link arm 19 is pivotally connected at a point "a" between its ends with one end of a second, shorter, link arm 21, the second end of which is pivotally connected with a backwardly facing part 22 formed on the arm 18.

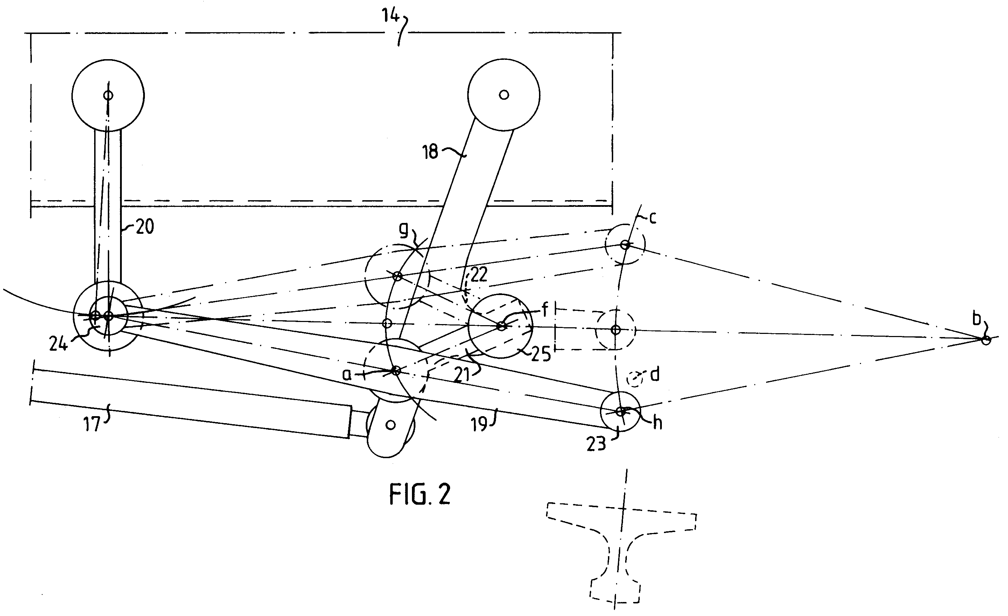

In fig. 2 which illustrates the movement pattern of the steering system according to the invention, the reference "b" denotes the centre for the circular arc "c" along which the centre "h" of the pivot connection 23 between the link arm 19 and the steering arm 12 moves as a result of the sprung movements of the wheel 5 in the vertical direction when the wheel is suspended in a per se known but non-depicted parallelogram suspension with swinging arms which are arranged parallel with the chassis members 14.

This movement should, if the pivot point "a" would be arranged on the arm 18, result in swinging of the arm 18 and accompanying longitudinal displacement of the bar 17, so that the suspension movement propagates into the vehicle's steering system. This is due to the fact that the centre "b" of the suspension movement and the link arm's 19 pivotal connection 24 with the arm 20 are positioned on opposite sides of the wheel's rotational axis "d" and steering axis "e" respectively.

In accordance with the invention, by connecting the link arm 19 with the arm 18 via a second link arm 21 and arranging the centre "f" of its pivotal connection 25 with the arm 18 in the centre of the circular arc "g" along which the centre "a" of its pivotal connection 26 with the link arm 19 moves, the swinging of the arm 18 can however be eliminated when the wheel moves along the circular arc "c" during its suspension movement. During movement of the pivotal point "h" along the circular arc "c" each point on the link arm 19 will move along a circular arc, the radius of which reduces in a direction towards the joint 24. With the embodiment shown in the figures a point "a" is chosen which lies just behind the middle of the link arm 19, which gives an advantageous structure to the system from the point of view of space and dimensioning.

Although the arrangement according to the invention has been described above with reference to its application on a so called "pusher axle", it is obvious that it can be used on other wheel axles with steerable wheels which are supported so that the sprung movement follows a circular arc.

## Claims

1. Arrangement for steering a steerable vehicle wheel which is sprung-suspended in such a way that the sprung movements of the wheel follow a circular arc lying in a longitudinal and vertical plane of the vehicle, comprising an active movement-transmitting link and swinging arm system between the vehicle's steering gear and a steering arm connected with an axle shaft, which presents a first swinging arm swingable (18) in a longitudinal vertical plane and a first link arm (19) pivotally connected with the first swinging arm (18) and with the steering arm (12) which, upon swinging of the first swinging arm (18), transmits swinging movements for steering deflection of the axle shaft, **characterized in that** the first swinging arm (18) is positioned on the side of the wheel's axis of rotation (d) which is opposite to the pivotal centre (b) of the suspension movement, in that a second swinging arm (20) is positioned beyond the first swinging arm - as seen from the steering arm (12) - and is pivotally connected with the first link arm (19), and in that the first swinging arm is connected with the first link arm by means of a second link arm (21), of which the pivot point (f) on the first swinging arm is positioned at the centre of the circular arc (g) along which its pivot point (a) on the first link arm moves when the pivot point (23) on the steering arm (12) moves along said circular arc (c) during suspension movement.

2. Arrangement according to claim 1, **characterized in that** the link arm and swinging arm system (11) connects the steering gear (6,7) for a steerable front wheel (2) to a steerable back wheel (5).

3. Arrangement according to claim 2, **characterized in that** the centre (b) for the sprung movement of the back wheel lies behind the wheel (5) and in that the first and second swinging arms (18 and 20 resp.) are arranged at a distance from each other in front of the wheel.

4. Arrangement according to any one of claims 1 to 3, **characterized in that** the first link arm (19) on each of its ends is pivotally connected with the steering arm (12) and the second swinging arm (20) through a first (23) and a second (24) joint connection respectively, and in that the pivot point (a) of the second link arm (21) on the first link arm is positioned in a central area between said first and second joint connections (23,24), preferably somewhat closer to the joint connection (23) with the steering arm (12).

5. Arrangement according to claim 4, **characterized in that** the first and the second link arms (19,21) are orientated parallel with one another in an at least substantially horizontal plane, when the vehicle's wheel (5) is pointing in the vehicle's longitudinal direction.

6. Arrangement according to any one of claims 1-5, **characterized in that** the first swinging arm (18) is pivotally connected at its outer end with one of the steering links (17) of the vehicle's steering gear which is displaceable in the vehicle's longitudinal direction, and in that the pivotal joint (25) of the first swinging arm with the second link arm (21) is positioned in a part (22) of the arm which is displaced towards the pivot connection (23) with the steering arm (12).

## Patentansprüche

1. Vorrichtung zum Lenken eines lenkbaren Fahrzeugrads, das derart federnd aufgehängt ist, daß die Federbewegungen des Rads einem Kreisbogen folgen, der in einer Längs- und Vertikalebene des Fahrzeugs liegt, umfassend ein aktives Bewegungsübertragungsgelenk- und Schwenkarm-System zwischen dem Lenkgetriebe des Fahrzeugs und einem mit einem Achsschenkel verbundenen Lenkhebel, das einen ersten, in einer Längs- und Vertikalebene schwenkbaren Schwenkarm (18) und einen ersten Gelenkarm (19) aufweist, der mit dem ersten Schwenkarm (18) und mit dem Lenkhebel (12) drehbar verbunden ist, welcher, auf das Verschwenken des ersten Schwenkarms (18) hin Schwenkbewegungen zum Lenkausschlag des Achsschenkels überträgt, **dadurch gekennzeichnet, daß** der erste Schwenkarm (18) auf der Seite der Radachse (d) positioniert ist, die dem Drehmittelpunkt (b) der Aufhängungsbewegung gegenüberliegt, daß ein zweiter Schwenkarm (20) - vom Lenkhebel (12) aus gesehen - hinter dem ersten Schwenkarm positioniert und mit dem ersten Gelenkarm (19) drehbar verbunden ist, und daß der erste Schwenkarm mit dem ersten Gelenkarm mittels eines zweiten Gelenkarms (21) verbunden ist, dessen auf dem ersten Schwenkarm befindliche Lagerdrehpunkt (f) am Mittelpunkt des Kreisbogens (g) positioniert ist, auf dem entlang sich dessen auf dem ersten Gelenkarm befindliche Lagerdrehpunkt (a) bewegt, wenn sich während der Federbewegung der auf dem Lenkhebel(12) befindliche Drehpunkt (23) entlang des Kreisbogens (c) bewegt.

2. Vorrichtung nach Anspruch 1, **dadurch gekennzeichnet, daß** das Gelenk- und Schwenkarmsystem (11) das Lenkgetriebe (6,7) für ein lenkbares Vorderrad (2) mit einem lenkbaren Hinterrad (5) verbindet.

3. Vorrichtung nach Anspruch 2, **dadurch gekennzeichnet, daß** der Mittelpunkt für die Federbewegung des Hinterrads hinter dem Rad (5) liegt, und daß der erste und zweite Schwenkarm (18 bzw. 20) in einem Abstand zueinander vor dem Rad angeordnet sind.

4. Vorrichtung nach einem der Ansprüche 1 bis 3, **dadurch gekennzeichnet, daß** der erste Gelenkarm (19) an jedem seiner Enden mit dem Lenkhebel (12) bzw. mit dem zweiten Schwenkarm (20) über eine erste (23) bzw. zweite Gelenkverbindung drehbar verbunden ist, und daß der auf dem ersten Gelenkarm befindliche Lagerdrehpunkt (a) des zweiten Gelenkarms (21) in einem Mittelbereich zwischen den ersten und zweiten Gelenkverbindungen (23,24) positioniert ist, vorzugsweise etwas näher zur Gelenkverbindung (23) mit dem Lenkhebel (12) hin.

5. Vorrichtung nach Anspruch 4, **dadurch gekennzeichnet, daß** der erste und der zweite Gelenkarm (19, 21) in zumindest im wesentlichen horizontaler Ebene zueinander parallel ausgerichtet sind, wenn das Fahrzeugrad (5) in Fahrzeuglängsrichtung zeigt.

6. Vorrichtung nach einem der Ansprüche 1-5, **dadurch gekennzeichnet, daß** der erste Schwenkarm (18) an dessen äußeren Ende mit einem der in Fahrzeuglängsrichtung verschiebbaren Lenkgestänge (17) des Fahrzeugslenkgetriebes gelenkig verbunden ist, und daß die Lagerdrehverbindung (25) des ersten Schwenkarms mit dem zweiten Gelenkarm (21) in einem zur Drehverbindung (23) mit dem Lenkhebel (12) hin verschobenen Teilstück (22) des Arms positioniert ist.

## Revendications

1. Agencement pour orienter une roue directrice de véhicule qui est suspendue élastiquement par ressort de telle manière que les mouvements élastiques de la roue suivent un arc circulaire s'étendant dans un plan longitudinal et vertical du véhicule, comprenant une liaison de transmission de mouvement active et un système à bras oscillant entre le mécanisme de direction du véhicule et un bras de direction relié à un arbre d'essieu, qui présente un premier bras oscillant (18) pouvant osciller dans un plan vertical longitudinal et un premier bras de liaison (19) relié de façon pivotante au premier bras oscillant (18) et au bras de direction (12) qui, lorsque le premier bras oscillant (18) oscille, transmet des mouvements d'oscillation pour commander le braquage de l'arbre d'essieu, caractérisé en ce que le premier bras oscillant (18) est placé sur le côté de l'axe de rotation (d) de la roue qui est opposé au centre de pivotement (b) du mouvement de suspension, en ce qu'un second bras oscillant (20) est placé devant le premier bras oscillant - en regardant à partir du bras de direction (12) - et est relié de façon pivotante au premier bras de liaison (19), et en ce que le premier bras oscillant est relié au premier bras de liaison au moyen d'un second bras de liaison (21), dont le point (f) de pivot sur le premier bras oscillant est placé au centre de l'arc circulaire (g) le long duquel son point de pivot (a) sur le premier bras de liaison se déplace lorsque le point de pivot (23) sur le bras de direction (12) se déplace le long de l'arc circulaire (c) pendant le mouvement de suspension.

2. Agencement selon la revendication 1, caractérisé en ce que le bras de liaison et le système (11) à bras oscillant relient le mécanisme de direction (6,7) depuis une roue avant directrice (2) jusqu'à une roue arrière directrice (5).

3. Agencement selon la revendication 2, caractérisé en ce que le centre (b) pour le mouvement élastique de la roue arrière est placé derrière la roue (5) et en ce que les premier et second bras oscillants (18 et 20 respectivement) sont agencés à distance l'un de l'autre en avant de la roue.

4. Agencement selon l'une quelconque des revendications 1 à 3, caractérisé en ce que le premier bras de liaison (19) est relié de façon pivotante, à chacune de ses extrémités, au bras de direction (12) et au second bras oscillant (20) par l'intermédiaire d'une première (23) et d'une seconde (24) articulation respectivement, et en ce que le point de pivot (a) du second bras de liaison (21) sur le premier bras de liaison est placé dans une zone centrale entre les première et seconde articulations (23,24), de préférence un peu plus près de l'articulation (23) de liaison avec le bras de direction (12).

5. Agencement selon la revendication 4, caractérisé en ce que les premier et second bras de liaison (19,21) sont orientés parallèlement entre eux dans un plan au moins sensiblement horizontal, lorsque la roue du véhicule (5) est dirigée suivant la direction longitudinale du véhicule.

6. Agencement selon l'une quelconque des revendications 1 à 5, caractérisé en ce que le premier bras oscillant (18) est relié de façon pivotante à son extrémité extérieure avec une des liaisons directrices (17) du mécanisme de direction du véhicule qui est déplaçable dans la direction longitudinale du véhicule, et en ce que l'articulation de pivotement (25) relevant le premier bras oscillant avec le second bras de liaison (21) est placée dans une partie (22) du bras qui est déplacée vers l'articulation de pivot (23) de liaison avec le bras de direction (12).
